# EUROPEAN PATENT APPLICATION

(11) **EP 4 831 693 A1**
(43) Date of publication of application: **28.10.2026**
(21) Application number: 26173374.5
(22) Date of filing: 20.04.2026
(51) Int. Cl.: G01V 3/18, G01V 11/00, G06F 18/21

(54) **PRESSURE AGENT FOR AUTOMATED EXTRACTION OF STRUCTURED PRESSURE POINT DATA**

(30) Priority: 21.04.2025 US 202563791911 P
(71) Applicant: Services Pétroliers Schlumberger, 75007 Paris (FR); GeoQuest Systems B.V., 2514 JG The Hague (NL)
(72) Inventor: ZHOU, Zengpeng, 34000 Montpellier (FR)
(74) Representative: Schlumberger Intellectual Property Department

(57) **Abstract**

A method for an automated pressure agent or processing pressure data includes receiving input data. The input data may include one or more documents including the pressure data and related to a source wellbore. The method also includes processing the one or more documents into one or more images using the pressure agent. The method further includes identifying one or more candidate table regions based on the one or more images. The method also includes identifying one or more pressure point tables based on the one or more candidate table regions. The method also includes extracting respective table data from the one or more pressure point tables using a vision language model (VLM). The method also includes generating one or more reshaped pressure point tables based on the one or more pressure point tables and the respective table data thereof.

## Description

### Cross-Reference to Related Applications

This application claims priority to and the benefit of U.S. Provisional Patent Application No. 63/791,911 filed on April 21, 2025, the entirety of which is incorporated herein by reference to the extent consistent with the present disclosure.

### Background

In many industries, organizations rely on legacy documents, including lengthy PDF reports, scanned images of printed materials, and other static, non-editable formats. These documents often contain valuable information that is relevant to day-to-day operations. For example, the oil and gas industry has a vast amount of historical information related to formation pressure data that may provide valuable insight into current drilling operations. This historical information, however, is frequently embedded in unstructured formats that are not readily accessible or searchable using conventional data processing techniques. Further, evaluating and extracting the useful data from these legacy documents often utilizes a manual review process involving trained experts. This manual workflow is both labor-intensive and error-prone.

What is needed, then, are systems and methods for automatically analyzing these documents and extracting relevant information from these documents.

### Summary

A method for processing pressure data is disclosed. The method may include obtaining input data including one or more documents. The one or more documents may include the pressure data and be related to a source wellbore. The method may also include processing the one or more documents into one or more images using a pressure agent. The method may also include identifying one or more candidate table regions based on the one or more images. The method may also include identifying one or more pressure point tables based on the one or more candidate table regions. The method may also include extracting respective table data from the one or more pressure point tables using a vision language model (VLM). The method may also include generating one or more reshaped pressure point tables based on the one or more pressure point tables and the respective table data thereof.

A computing system is also disclosed. The computing system includes one or more processors and a memory system. The memory system includes one or more non-transitory computer-readable media storing instructions that, when executed by at least one of the one or more processors, cause the computing system to perform operations for processing pressure data. The operations may include obtaining input data including one or more documents. The one or more documents may include the pressure data and be related to a source wellbore. The operations may also include processing the one or more documents into one or more images using a pressure agent. The operations may also include identifying one or more candidate table regions based on the one or more images. The operations may also include identifying one or more pressure point tables based on the one or more candidate table regions. The operations may also include extracting respective table data from the one or more pressure point tables using a vision language model (VLM). The operations may also include generating one or more reshaped pressure point tables based on the one or more pressure point tables and the respective table data thereof.

A non-transitory computer-readable medium is also disclosed. The medium stores instructions that, when executed by one or more processors of a computing system, cause the computing system to perform operations for processing pressure data. The operations may include obtaining input data including one or more documents. The one or more documents may include the pressure data and be related to a source wellbore. The operations may also include processing the one or more documents into one or more images using a pressure agent. The operations may also include identifying one or more candidate table regions based on the one or more images. The operations may also include identifying one or more pressure point tables based on the one or more candidate table regions. The operations may also include extracting respective table data from the one or more pressure point tables using a vision language model (VLM). The operations may also include generating one or more reshaped pressure point tables based on the one or more pressure point tables and the respective table data thereof.

It will be appreciated that this summary is intended merely to introduce some aspects of the present methods, systems, and media, which are more fully described and/or claimed below. Accordingly, this summary is not intended to be limiting.

### Brief Description of the Drawings

The accompanying drawings, which are incorporated in and constitute a part of this specification, illustrate embodiments of the present teachings and together with the description, serve to explain the principles of the present teachings. In the figures:
Figure 1 illustrates an example of a system that includes various management components to manage various aspects of a geologic environment, according to an embodiment.
Figure 2 illustrates a flowchart of a workflow for automated extraction of pressure data, according to an embodiment.
Figure 3 illustrates a flowchart of a method for automated extraction of pressure data, according to an embodiment.
Figure 4 illustrates a flowchart of a method for processing pressure data, according to an embodiment.
Figure 5 illustrates a schematic view of a computing system for performing at least a portion of the method(s) described herein, according to an embodiment.

### Detailed Description

Reference will now be made in detail to embodiments, examples of which are illustrated in the accompanying drawings and figures. In the following detailed description, numerous specific details are set forth in order to provide a thorough understanding of the present disclosure. However, it will be apparent to one of ordinary skill in the art that the present disclosure may be practiced without these specific details. In other instances, well-known methods, procedures, components, circuits, and networks have not been described in detail so as not to unnecessarily obscure aspects of the embodiments.

It will also be understood that, although the terms first, second, etc. may be used herein to describe various elements, these elements should not be limited by these terms. These terms are only used to distinguish one element from another. For example, a first object or step could be termed a second object or step, and, similarly, a second object or step could be termed a first object or step, without departing from the scope of the present disclosure. The first object or step, and the second object or step, are both, objects or steps, respectively, but they are not to be considered the same object or step.

The terminology used in the description herein is for the purpose of describing particular embodiments and is not intended to be limiting. As used in this description and the appended claims, the singular forms "a," "an" and "the" are intended to include the plural forms as well, unless the context clearly indicates otherwise. It will also be understood that the term "and/or" as used herein refers to and encompasses any possible combinations of one or more of the associated listed items. It will be further understood that the terms "includes," "including," "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, as used herein, the term "if" may be construed to mean "when" or "upon" or "in response to determining" or "in response to detecting," depending on the context.

Attention is now directed to processing procedures, methods, techniques, and workflows that are in accordance with some embodiments. Some operations in the processing procedures, methods, techniques, and workflows disclosed herein may be combined and/or the order of some operations may be changed.

### System Overview

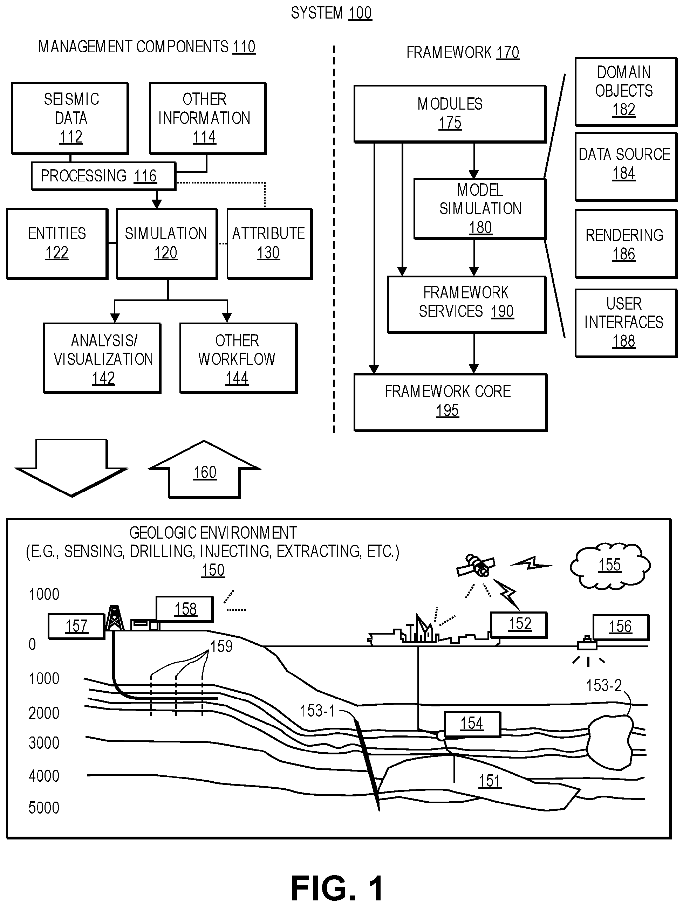

Figure 1 illustrates an example of a system 100 that includes various management components 110 to manage various aspects of a geologic environment 150 (e.g., an environment that includes a sedimentary basin, a reservoir 151, one or more faults 153-1, one or more geobodies 153-2, etc.). For example, the management components 110 may allow for direct or indirect management of sensing, drilling, injecting, extracting, etc., with respect to the geologic environment 150. In turn, further information about the geologic environment 150 may become available as feedback 160 (e.g., optionally as input to one or more of the management components 110).

In the example of Figure 1, the management components 110 include a seismic data component 112, an additional information component 114 (e.g., well/logging data), a processing component 116, a simulation component 120, an attribute component 130, an analysis/visualization component 142 and a workflow component 144. In operation, seismic data and other information provided per the components 112 and 114 may be input to the simulation component 120.

In an example embodiment, the simulation component 120 may rely on entities 122. Entities 122 may include earth entities or geological objects such as wells, surfaces, bodies, reservoirs, etc. In the system 100, the entities 122 may include virtual representations of actual physical entities that are reconstructed for purposes of simulation. The entities 122 may include entities based on data acquired via sensing, observation, etc. (e.g., the seismic data 112 and other information 114). An entity may be characterized by one or more properties (e.g., a geometrical pillar grid entity of an earth model may be characterized by a porosity property). Such properties may represent one or more measurements (e.g., acquired data), calculations, etc.

In an example embodiment, the simulation component 120 may operate in conjunction with a software framework such as an object-based framework. In such a framework, entities may include entities based on pre-defined classes to facilitate modeling and simulation. A commercially available example of an object-based framework is the MICROSOFT^{®} .NET^{®} framework (Redmond, Washington), which provides a set of extensible object classes. In the .NET^{®} framework, an object class encapsulates a module of reusable code and associated data structures. Object classes may be used to instantiate object instances for use in by a program, script, etc. For example, borehole classes may define objects for representing boreholes based on well data.

In the example of Figure 1, the simulation component 120 may process information to conform to one or more attributes specified by the attribute component 130, which may include a library of attributes. Such processing may occur prior to input to the simulation component 120 (e.g., consider the processing component 116). As an example, the simulation component 120 may perform operations on input information based on one or more attributes specified by the attribute component 130. In an example embodiment, the simulation component 120 may construct one or more models of the geologic environment 150, which may be relied on to simulate behavior of the geologic environment 150 (e.g., responsive to one or more acts, whether natural or artificial). In the example of Figure 1, the analysis/visualization component 142 may allow for interaction with a model or model-based results (e.g., simulation results, etc.). As an example, output from the simulation component 120 may be input to one or more other workflows, as indicated by a workflow component 144.

As an example, the simulation component 120 may include one or more features of a simulator such as the ECLIPSE^{™} reservoir simulator (SLB, Houston Texas), the INTERSECT^{™} reservoir simulator (SLB, Houston Texas), etc. As an example, a simulation component, a simulator, etc. may include features to implement one or more meshless techniques (e.g., to solve one or more equations, etc.). As an example, a reservoir or reservoirs may be simulated with respect to one or more enhanced recovery techniques (e.g., consider a thermal process such as SAGD, etc.).

As an example, the simulation component 120 may include one or more features of a simulator such as SYMMETRY^{™} software (SLB, Houston, Texas). More particularly, SYMMETRY^{™} may process workflows in a single integrated environment with accurate thermodynamic fluid representation and consistent modeling across multiple disciplines including process, production, and HSE. The simulator integrates steady-state and transient (e.g., dynamic) analyses that may be tailored for each domain. This approach enables users to optimize processes in upstream, midstream, and downstream sectors while maximizing profits and minimizing capital expenditures. It may also help reduce emissions, energy consumption, and waste.

As an example, the simulation component 120 may include one or more features of a simulator such as PIPESIM^{™} (SLB, Houston, Texas). More particularly, PIPESIM^{™} is steady-state multiphase flow simulator that incorporates the three areas of flow modeling: multiphase flow, heat transfer and fluid behavior.

As an example, the simulation component 120 may include one or more features of a simulator such as OLGA^{™} (SLB, Houston, Texas). More particularly, OLGA^{™} is a dynamic multiphase flow simulator that models transient flow (e.g., time-dependent behaviors) to maximize production potential. Transient modeling is a component for feasibility studies and field development design. Dynamic simulation is useful in deep water and is used in both offshore and onshore developments to investigate transient behavior in pipelines and wellbores. Transient simulation with the OLGA^{™} simulator provides an added dimension to steady-state analysis by predicting system dynamics, such as time-varying changes in flow rates, fluid compositions, temperature, solids deposition, and operational changes.

In an example embodiment, the management components 110 may include features of a commercially available framework such as the PETREL^{®} seismic to simulation software framework (SLB, Houston, Texas). The PETREL^{®} framework provides components that allow for optimization of exploration and development operations. The PETREL^{®} framework includes seismic to simulation software components that may output information for use in increasing reservoir performance, for example, by improving asset team productivity. Through use of such a framework, various professionals (e.g., geophysicists, geologists, and reservoir engineers) may develop collaborative workflows and integrate operations to streamline processes. Such a framework may be considered an application and may be considered a data-driven application (e.g., where data is input for purposes of modeling, simulating, etc.).

In an example embodiment, various aspects of the management components 110 may include add-ons or plug-ins that operate according to specifications of a framework environment. For example, a commercially available framework environment marketed as the OCEAN^{®} framework environment (SLB, Houston, Texas) allows for integration of add-ons (or plug-ins) into a PETREL^{®} framework workflow. The OCEAN^{®} framework environment leverages .NET^{®} tools (Microsoft Corporation, Redmond, Washington) and offers stable, user-friendly interfaces for efficient development. In an example embodiment, various components may be implemented as add-ons (or plug-ins) that conform to and operate according to specifications of a framework environment (e.g., according to application programming interface (API) specifications, etc.).

Figure 1 also shows an example of a framework 170 that includes a model simulation layer 180 along with a framework services layer 190, a framework core layer 195 and a modules layer 175. The framework 170 may include the commercially available OCEAN^{®} framework where the model simulation layer 180 is the commercially available PETREL^{®} model-centric software package that hosts OCEAN^{®} framework applications. In an example embodiment, the PETREL^{®} software may be considered a data-driven application. The PETREL^{®} software may include a framework for model building and visualization.

As an example, a framework may include features for implementing one or more mesh generation techniques. For example, a framework may include an input component for receipt of information from interpretation of seismic data, one or more attributes based at least in part on seismic data, log data, image data, etc. Such a framework may include a mesh generation component that processes input information, optionally in conjunction with other information, to generate a mesh.

In the example of Figure 1, the model simulation layer 180 may provide domain objects 182, act as a data source 184, provide for rendering 186 and provide for various user interfaces 188. Rendering 186 may provide a graphical environment in which applications may display their data while the user interfaces 188 may provide a common look and feel for application user interface components.

As an example, the domain objects 182 may include entity objects, property objects and optionally other objects. Entity objects may be used to geometrically represent wells, surfaces, bodies, reservoirs, etc., while property objects may be used to provide property values as well as data versions and display parameters. For example, an entity object may represent a well where a property object provides log information as well as version information and display information (e.g., to display the well as part of a model).

In the example of Figure 1, data may be stored in one or more data sources (or data stores, generally physical data storage devices), which may be at the same or different physical sites and accessible via one or more networks. The model simulation layer 180 may be configured to model projects. As such, a particular project may be stored where stored project information may include inputs, models, results and cases. Thus, upon completion of a modeling session, a user may store a project. At a later time, the project may be accessed and restored using the model simulation layer 180, which may recreate instances of the relevant domain objects.

In the example of Figure 1, the geologic environment 150 may include layers (e.g., stratification) that include a reservoir 151 and one or more other features such as the fault 153-1, the geobody 153-2, etc. As an example, the geologic environment 150 may be outfitted with any of a variety of sensors, detectors, actuators, etc. For example, equipment 152 may include communication circuitry to receive and to transmit information with respect to one or more networks 155. Such information may include information associated with downhole equipment 154, which may be equipment to acquire information, to assist with resource recovery, etc. Other equipment 156 may be located remote from a well site and include sensing, detecting, emitting or other circuitry. Such equipment may include storage and communication circuitry to store and to communicate data, instructions, etc. As an example, one or more satellites may be provided for purposes of communications, data acquisition, etc. For example, Figure 1 shows a satellite in communication with the network 155 that may be configured for communications, noting that the satellite may additionally or instead include circuitry for imagery (e.g., spatial, spectral, temporal, radiometric, etc.).

Figure 1 also shows the geologic environment 150 as optionally including equipment 157 and 158 associated with a well that includes a substantially horizontal portion that may intersect with one or more fractures 159. For example, consider a well in a shale formation that may include natural fractures, artificial fractures (e.g., hydraulic fractures) or a combination of natural and artificial fractures. As an example, a well may be drilled for a reservoir that is laterally extensive. In such an example, lateral variations in properties, stresses, etc. may exist where an assessment of such variations may assist with planning, operations, etc. to develop a laterally extensive reservoir (e.g., via fracturing, injecting, extracting, etc.). As an example, the equipment 157 and/or 158 may include components, a system, systems, etc. for fracturing, seismic sensing, analysis of seismic data, assessment of one or more fractures, etc.

As mentioned, the system 100 may be used to perform one or more workflows. A workflow may be a process that includes a number of worksteps. A workstep may operate on data, for example, to create new data, to update existing data, etc. As an example, a workstep may operate on one or more inputs and create one or more results, for example, based on one or more algorithms. As an example, a system may include a workflow editor for creation, editing, executing, etc. of a workflow. In such an example, the workflow editor may provide for selection of one or more pre-defined worksteps, one or more customized worksteps, etc. As an example, a workflow may be a workflow implementable in the PETREL^{®} software, for example, that operates on seismic data, seismic attribute(s), etc. As an example, a workflow may be a process implementable in the OCEAN^{®} framework. As an example, a workflow may include one or more worksteps that access a module such as a plug-in (e.g., external executable code, etc.).

### Systems and Methods for Automating the Extraction of Structured Pressure Point Data

The present disclosure includes systems and methods for automating the extraction of structured pressure point data from historical records to thereby eliminate manual data entry, and accelerate the process of converting the historical records into actionable digital data. As further described herein, the systems and methods may be implemented by a pressure agent capable of or configured to execute, implement, or otherwise automate a workflow disclosed herein. The pressure agent may execute any one or more steps of the workflow automatically. The pressure agent may be or include an orchestrated automatic workflow that extracts pressure data from input data, as further described herein. The historical records may include extensive and lengthy PDF reports, scanned images, other legacy documents, or a combination thereof. The system and method disclosed herein may utilize one or more import agents, such as the pressure agent, powered by one or more generative artificial intelligence (AI) models to extract the structured pressure point data from the historical records and import or integrate them into a database, such as a conventional or traditional quantitative workflow of the database.

The system and/or the pressure agent thereof disclosed herein may be capable of or configured to automate the extraction of structured pressure point data from large, many-page PDF reports. The system and/or the pressure agent thereof may be capable of handling diverse PDF inputs. The system and/or the pressure agent thereof may integrate several advanced processing techniques to ensure accurate, efficient, and fully automated extraction of data. The system and/or the pressure agent thereof may achieve the foregoing by providing and/or utilizing one or more of the following: a robust PDF ingestion, advanced image processing, optical character recognition (OCR) and keyword matching, vision language model (VLM) extraction, data reshaping and integration, or any combination thereof. For example, with respect to the robust PDF ingestion, the pressure agent may accept a wide variety of PDF reports regardless of a respective layout or respective length thereof, thereby enabling seamless processing of vast, extensive documents. In another example, with respect to the advanced image processing, the pressure agent may leverage line-based and density-based detection and image layout analysis to identify candidate regions that may likely contain tables. The advanced image processing techniques may help isolate regions of interest even in complex or cluttered report layouts. In another example, with respect to the OCT and the keyword matching, the system and/or the pressure agent thereof may apply OCR to convert the identified candidate table regions and/or the image data thereof into text. The system and/or the pressure agent thereof may utilize keyword matching to accurately pinpoint target tables and thereby filter out irrelevant content. The system and/or the pressure agent thereof may utilize the vision language model (VLM) extraction to further process the candidate tables. For example, the VLM may extract and validate the table structure (schema), ensuring that the columns and headers match expected patterns, such as table patterns. The VLM may also extract the table contents (cell values) and/or verify the accuracy of the recognized data. Illustrative table contents may be or include, but are not limited to, units of measure, heading, titles, column headings, row headings, or the like, or any combination thereof. The system and/or the pressure agent thereof may also utilize the data reshaping and integration. For example, the extracted information may be reshaped into predetermined domain-specific columns. The reformatted or reshaped data may be integrated into a database, such as TECHLOG. The integration may include associating, such as directly associating, the reformatted/reshaped data to the source wellbore, thereby facilitating further analysis and decision-making. Further details regarding the foregoing will be described below.

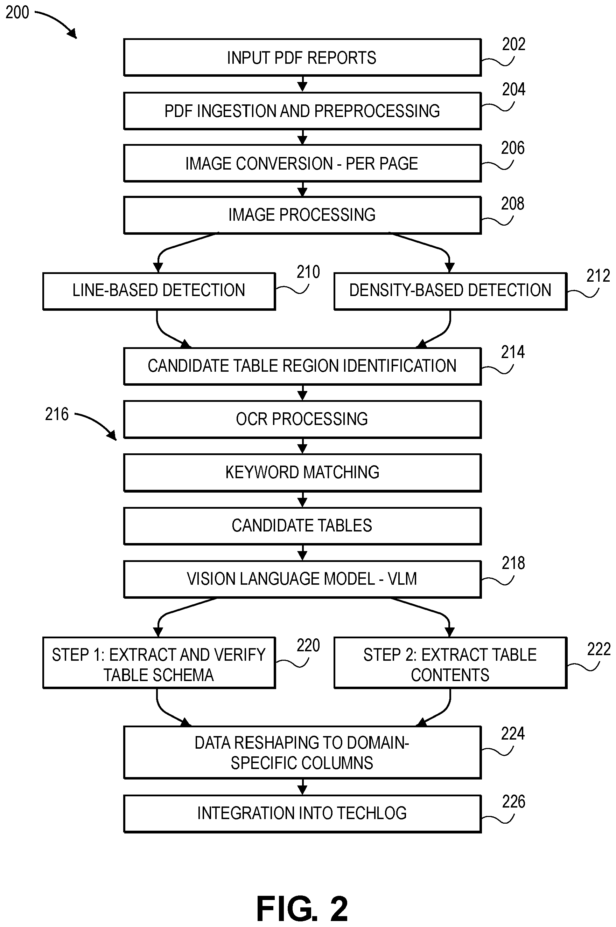

Figure 2 illustrates a flowchart of a workflow 200 for a pressure agent, according to an embodiment. The flowchart of the workflow 200 is discussed in detail below.

The workflow 200 may include imputing or inputting PDF reports, as at 202. The system and/or the pressure agent thereof may utilize a robust PDF ingestion. For example, the pressure agent may be capable of or configured to ingest various PDF files and initiate a preprocessing phase, as at 204. The preprocessing phase may include receiving input data including a plurality of PDF files and/or documents. The workflow 200 may also include converting the PDF files into images, as at 206. Converting the PDF files into images allows or enables subsequent image processing thereof.

The workflow 200 may also include image processing, as at 208. For example, the system and/or the pressure agent thereof may utilize or apply advanced image processing techniques to the images to detect candidate regions. The advanced image processing techniques employed may include one or more of line-based detection, as at 210, density-based analysis, as at 212, preliminary layout-based filtering, or any combination thereof. The line-based detection may be or include an algorithm that may be capable of or configured to detect straight lines and boundaries typically associated with table structures. The density-based analysis may be or include a technique capable of or configured to analyze the density of visual elements, such as clusters of text, grid patterns, or any combination thereof, and flag or identify potential table areas. The preliminary layout-based filtering may be or include algorithms capable of or configured to interpret the detected line grid, the density, or any combination thereof and reconstruct a grid to evaluate the likelihood that the candidate region represents a pressure point table. The workflow 200 may also include identifying candidate table regions, as at 214. It should be appreciated that the foregoing advance image processing techniques may facilitate or improve the reliability of identifying candidate table regions within large, multi-page reports.

The system and/or the pressure agent thereof may utilize optical character recognition (OCR) processing and keyword matching, as at 216. For example, the system and/or the pressure agent thereof may apply OCR to convert image data of the identified candidate regions to text. The system and/or the pressure agent thereof may also utilize keyword matching on the OCR output or the text to ensure that regions containing relevant table data, such as pressure point information, may progress further in processing by the system and/or the pressure agent thereof.

The workflow 200 may also include a vision language model (VLM), as at 218. For example, the system and/or the pressure agent thereof may utilize a VLM for extraction. In at least one example, the system and/or the pressure agent thereof may direct candidate table regions to a deployed VLM. The VLM may be capable of or configured to extract schema and/or content from the candidate regions. For example, the VLM may extract the table's schema, and verify column headers and structure against expected formats, as at 220. In another example, the VLM may extract actual data content from the table of the candidate regions, as at 222. It should be appreciated that the VLM may be capable of or configured to conduct the schema extraction and the content extraction in a two-step process. The foregoing two-step process may enhance accuracy and facilitate validating the data extraction process.

The workflow 200 may also include data reshaping to domain-specific columns, as at 224. Regarding the data reshaping and integration, the system and/or the pressure agent thereof may reshape the extracted table data into predetermined domain-specific columns. The workflow 200 may also include integration into a database, as at 226. For example, the system and/or the pressure agent thereof may also integrate the data (e.g., extracted table data) into a database and align it with the corresponding source wellbore, thereby ensuring that the extracted pressure point data is available for downstream applications.

### Exemplary Method

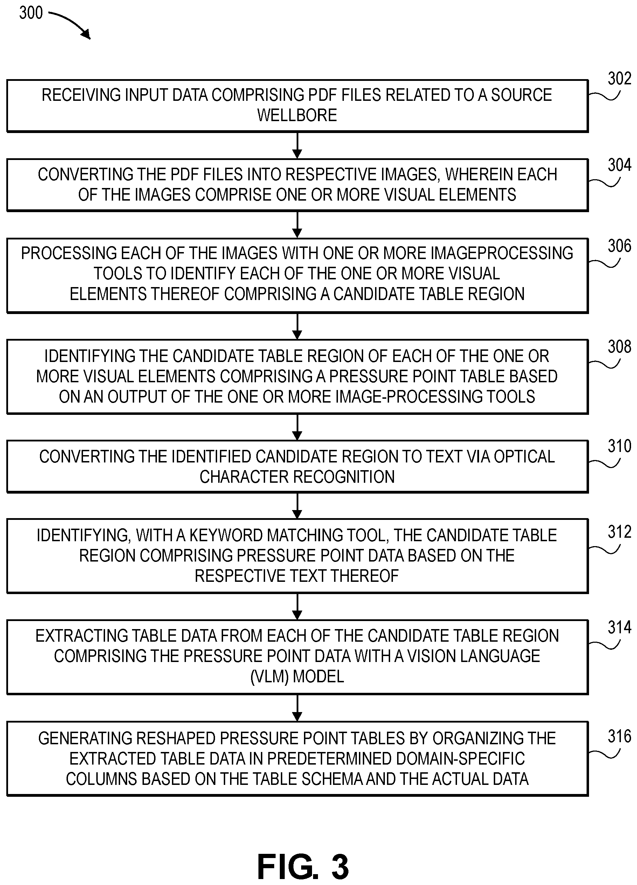

Figure 3 illustrates a flowchart of a method 300 for an automated pressure agent, according to an embodiment. An illustrative order of the method 300 is provided below; however, one or more portions of the method 300 may be performed in a different order, simultaneously, repeated, or omitted. At least a portion of the method 300 may be performed using a computing system.

The method 300 may include receiving input data comprising PDF files related to a source wellbore, as at 302.

The method 300 may also include converting the PDF files into respective images, wherein each of the images comprise one or more visual elements, as at 304.

The method 300 may also include processing each of the images with one or more image-processing tools to identify each of the one or more visual elements thereof comprising a candidate table region, as at 306.

The method 300 may further include identifying the candidate table region of each of the one or more visual elements comprising a pressure point table based on an output of the one or more image-processing tools, as at 308.

The method 300 may also include converting the identified candidate table region to text via optical character recognition (OCR), as at 310.

The method 300 may also include identifying, with a keyword matching tool, the candidate table region comprising pressure point data based on the respective text thereof, as at 312.

The method 300 may also include extracting table data from each of the candidate table region comprising the pressure point data with a vision language (VLM) model, as at 314.

The method 300 may also include generating reshaped pressure point tables by organizing the extracted table data in predetermined domain-specific columns based on the table schema and the actual data, as at 316.

The method 300 may further include displaying the reshaped pressure point tables.

The method 300 may also include integrating the reshaped pressure point tables in a database.

The method 300 may further include performing an action based on the reshaped pressure point tables. The action may be or include generating and/or transmitting a signal that recommends, instructs, or causes a physical action to occur. The physical action may include selecting where to drill a wellbore, drilling the wellbore, varying a weight and/or torque on a drill bit that is drilling the wellbore, varying a drilling trajectory of the wellbore, varying a concentration and/or flow rate of a fluid pumped into the wellbore, or the like.

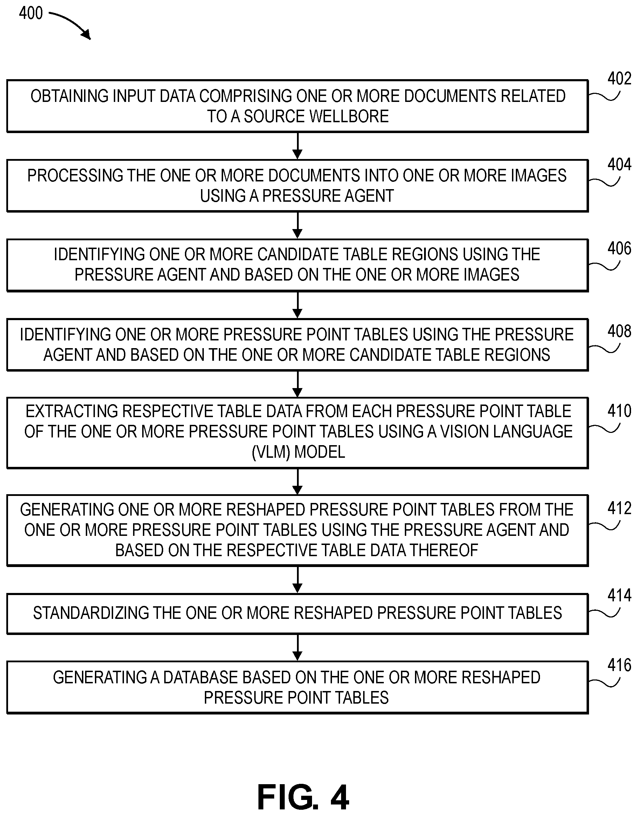

Figure 4 illustrates a flowchart of a method or workflow 400 for processing pressure data, according to an embodiment. For example, the method 400 may be for the automated extraction of pressure data. An illustrative order of the method 400 is provided below; however, one or more portions of the method 400 may be performed in a different order, simultaneously, repeated, or omitted. At least a portion of the method 400 may be performed using a computing system. Any one or more portions of the method 400 may be implemented or orchestrated by a pressure agent. The implementation may be automatic.

The method 400 may include obtaining input data including one or more documents related to a source wellbore, as at 402. The one or more documents may include one or more of a digital file, an electronic file, an electronic document, a digital document, a computer-readable document, or the like, or a combination thereof. At least one document of the one or more documents may be in a portable document format (PDF). The input data may be directed to, obtained by, or received by a pressure agent.

The method 400 may also include processing the one or more documents into one or more images using the pressure agent, as at 404. Each image of the one or more images may include one or more visual elements. Processing the one or more documents into the one or more images may include converting the one or more documents into the one or more images using a pressure agent. The pressure agent may convert the one or more documents into the one or more images automatically. Processing the one or more documents into the one or more images may also include applying one or more image processing operations to the one or more images. The one or more image processing operations may include one or more of a deskewing operation, a denoising operation, a standardization operation, or the like, or a combination thereof. The deskewing operation may correct a respective alignment, a respective tilt, or a combination thereof, of each image of the one or more images. For example, the deskewing operation may correct a tilt of the image, an alignment of text lines in the image, an alignment of an element (e.g., lines, shapes, text, etc.) of the image, or a combination thereof. The standardization operation may modify, normalize, or otherwise standardize a dimension of each image of the one or more images. The dimension may be a width, a length, an area, or the like, or a combination thereof. Processing the one or more documents into the one or more images may also include identifying the one or more visual elements in each image of the one or more images using the pressure agent. Each visual element of the one or more visual elements may include at least one cluster of text, at least one grid pattern, at least one line, at least one region, at least one textual density, or a combination thereof. The pressure agent may use or utilize convolution kernels to identify or detect the one or more visual images.

The method 400 may further include identifying one or more candidate table regions using the pressure agent and based on the one or more images, as at 406. Identifying the one or more candidate table regions may include processing the one or more visual elements of each image of the one or more images using the pressure agent and one or more image-processing tools to identify one or more table properties associated with tables in each visual element of the one or more visual elements. The one or more image-processing tools may include a line-based detection tool, a density-based analysis tool, or the like, or a combination thereof. The one or more table properties may include one or more straight lines, one or more boundaries, one or more table densities, or the like, or a combination thereof. Processing the one or more visual elements of each image of the one or more images may include analyzing the one or more visual elements of each image of the one or more images using the line-based detection tool to identify the one or more straight lines associated with the tables, the one or more boundaries associated with the tables, or a combination thereof. Processing the one or more visual elements of each image of the one or more images may include analyzing the one or more visual elements of each image of the one or more images using the density-based analysis tool to identify the one or more table densities based on a respective density of each visual element of the one or more visual elements. The respective density of each visual element of the one or more visual elements may be based on the density of the at least one cluster of text, the at least one grid pattern, or a combination thereof.

Identifying the one or more candidate table regions may also include identifying the one or more candidate table regions of each visual element of the one or more visual elements of each image of the one or more images based on the one or more table properties. The one or more candidate table regions may be identified based on the one or more straight lines, the one or more boundaries, the one or more table densities, or a combination thereof. Identifying the one or more candidate table regions may include generating a respective grid for each visual element of the one or more visual elements based on the one or more straight lines, the one or more boundaries, the one or more table densities, or a combination thereof. The respective grid may be generated using a layout-based filtering tool. The respective grid may be associated with a respective candidate table region of the one or more candidate table regions.

Identifying the one or more candidate table regions may also include identifying the one or more candidate table regions based on the respective grid of each visual element of the one or more visual elements. The one or more candidate table regions may be generated using the layout-based filtering tool. Identifying the one or more candidate table regions based on the one or more table densities of each visual element of the one or more visual elements may include comparing the respective table density of each visual element to a respective density of a region proximal or adjacent the respective visual element. The visual element may be identified as including a respective candidate table region of the one or more candidate table regions when the respective table density of the visual element relative to the respective density of the region proximal or adjacent the visual element may be greater than or equal to a predetermined threshold (e.g., a user defined threshold).

The method 400 may also include identifying one or more pressure point tables using the pressure agent and based on the one or more candidate table regions of each visual element of the one or more visual elements, as at 408. Identifying the one or more pressure point tables may include converting each candidate table region of the one or more candidate table regions to text using the pressure agent. The one or more candidate table regions may be converted to text using optical character recognition (OCR). Identifying the one or more pressure point tables may also include identifying the one or more pressure point tables based on the respective text of each candidate table region of the one or more candidate table regions using the pressure agent. The pressure agent may identify the one or more pressure point tables using a keyword matching tool. The keyword matching tool may include a database of keywords related to pressure point data. The database of keywords may be modifiable or configurable (e.g., at the time of executing the method). The database of keywords may include one or more keywords. The one or more keywords may be provided by one or more of a host system, a domain expert, a user, an operator, a curated database, or a combination thereof; (e.g., makes pressure agent workflow configurable).

The method 400 may also include extracting respective table data from each pressure point table of the one or more pressure point tables using a vision language (VLM) model, as at 410. The VLM may include a general-purpose VLM. The VLM may be interchangeable with any one or more suitable VLMs. The respective table data of each pressure point table of the one or more pressure point tables may include one or more of table schema, table values, or a combination thereof. The table schema may include one or more of a table structure, one or more headers (e.g., column header), or a combination thereof. Each table value of the table values may include a numerical value, a unit of measurement, or a combination thereof. Extracting the table data may include extracting the respective table schema from each pressure point table of the one or more pressure point tables using the VLM model. Extracting the table data may also include extracting the respective table values from each pressure point table of the one or more pressure point tables using the VLM model.

The method 400 may also include generating one or more reshaped pressure point tables from the one or more pressure point tables using the pressure agent and based on the respective table data thereof, as at 412. Generating the one or more reshaped pressure point tables may include sorting and/or organizing the respective table data from each pressure point table of the one or more pressure point tables in predetermined domain-specific columns based on the respective table schema and the respective table values thereof. The predetermined domain-specific columns may include one or more of a pretest number, a depth, a formation pressure, a pretest status, a mud pressure before a pretest, a mud pressure after the pretest, a temperature, a pretest volume, a mud weight, a mobility, or the like, or a combination thereof.

The method 400 may also include standardizing the one or more reshaped pressure point tables, as at 414. Standardizing the one or more reshaped pressure point tables may include standardizing one or more of respective names of the predetermined domain-specific columns, respective units of measurement of the predetermined domain-specific columns, or a combination thereof.

The method 400 may also include generating a database or at least one database based on the one or more reshaped pressure point tables, as at 416. Generating the database may include one or more of integrating the one or more reshaped pressure point tables into the database, associating or relating the one or more reshaped pressure point tables with the source wellbore, or a combination thereof.

The method 400 may also include generating an output based on the one or more candidate table regions, the one or more pressure point tables, the respective table data from each pressure point table of the one or more pressure point tables, the reshaped pressure point tables, the database, or a combination thereof. The method 400 may also include displaying the output.

The method 400 may also include performing an action in response to generating the output or displaying the output. The action may include generating or transmitting a signal that recommends, instructs, or causes a physical action to occur. The physical action may include one or more of optimizing a trajectory of a wellbore drilling operation, conducting drilling operations, conducting an exploratory operation, utilizing a single-upscaled permeability model in a simulation model, designing a production strategy, designing a hydraulic fracturing strategy, conducting risk assessments, selecting where to drill a wellbore, drilling the wellbore, varying a weight and/or torque on a drill bit that may be drilling the wellbore, determining a location and/or amount of hydrocarbons in a subsurface formation and then varying a drilling trajectory of the wellbore toward the hydrocarbons, varying a concentration and/or flow rate of a fluid pumped into the wellbore, implementing an interpretation workflow, or a combination thereof.

In at least one example, the physical action may include implementing the interpretation workflow. The interpretation workflow may be or include, but is not limited to, one or more of: consolidating the pressure data with one or more pretest acquisition datasets to re-establish data provenance between the one or more documents and the one or more pretest acquisition datasets; interpreting one or more formation pressure gradients based on the pressure data to identify one or more geological layer separations within a subsurface formation; determining one or more fluid contacts (e.g., an oil -water contact and/or an oil-gas contact) within the subsurface formation based on the pressure data; classifying the subsurface formation as one or more of a single reservoir system or a multiple reservoir system based on the pressure data; identifying one or more net pay zones within the subsurface formation based on the pressure data; or a combination thereof. In addition to or in response to implementing the interpretation workflow, the physical action may also include optimizing a trajectory of a wellbore drilling operation, conducting drilling operations, conducting an exploratory operation, selecting where to drill a wellbore, drilling the wellbore, varying a weight and/or torque on a drill bit that may be drilling the wellbore, or a combination thereof.

### Exemplary Computing System

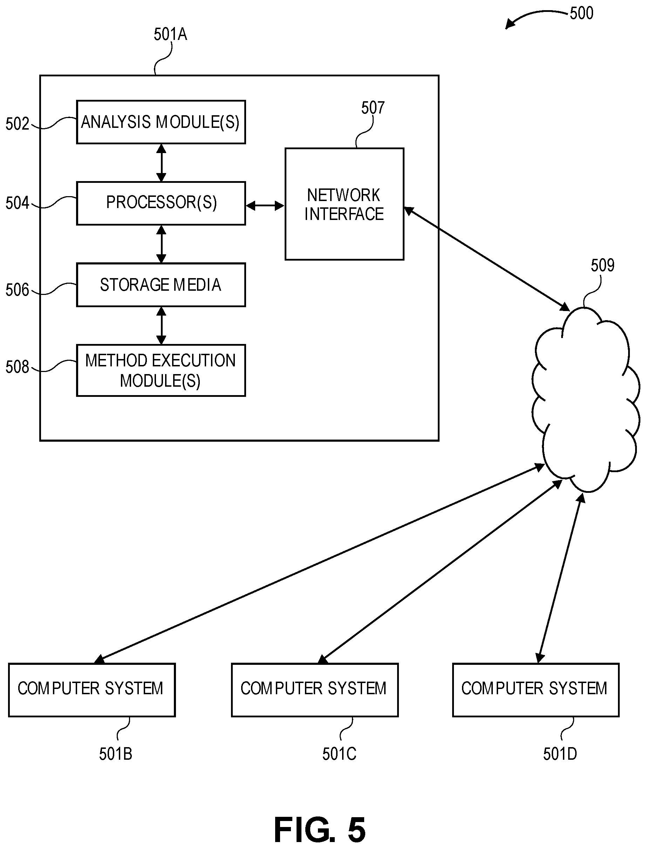

In some embodiments, the methods of the present disclosure may be executed by a computing system. Figure 5 illustrates an example of such a computing system 500, in accordance with some embodiments. The computing system 500 may include a computer or computer system 501A, which may be an individual computer system 501A or an arrangement of distributed computer systems. The computer system 501A includes one or more analysis modules 502 that are configured to perform various tasks according to some embodiments, such as one or more methods disclosed herein. To perform these various tasks, the analysis module 502 executes independently, or in coordination with, one or more processors 504, which is (or are) connected to one or more storage media 506. The processor(s) 504 is (or are) also connected to a network interface 507 to allow the computer system 501A to communicate over a data network 509 with one or more additional computer systems and/or computing systems, such as 501B, 501C, and/or 501D (note that computer systems 501B, 501C and/or 501D may or may not share the same architecture as computer system 501A, and may be located in different physical locations, e.g., computer systems 501A and 501B may be located in a processing facility, while in communication with one or more computer systems such as 501C and/or 501D that are located in one or more data centers, and/or located in varying countries on different continents).

A processor may include a microprocessor, microcontroller, processor module or subsystem, programmable integrated circuit, programmable gate array, or another control or computing device.

The storage media 506 may be implemented as one or more computer-readable or machine-readable storage media. Note that while in the example embodiment of Figure 5 storage media 506 is depicted as within computer system 501A, in some embodiments, storage media 506 may be distributed within and/or across multiple internal and/or external enclosures of computing system 501A and/or additional computing systems. Storage media 506 may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories, magnetic disks such as fixed, floppy and removable disks, other magnetic media including tape, optical media such as compact disks (CDs) or digital video disks (DVDs), BLURAY^{®} disks, or other types of optical storage, or other types of storage devices. Note that the instructions discussed above may be provided on one computer-readable or machine-readable storage medium, or may be provided on multiple computer-readable or machine-readable storage media distributed in a large system having possibly plural nodes. Such computer-readable or machine-readable storage medium or media is (are) considered to be part of an article (or article of manufacture). An article or article of manufacture may refer to any manufactured single component or multiple components. The storage medium or media may be located either in the machine running the machine-readable instructions, or located at a remote site from which machine-readable instructions may be downloaded over a network for execution.

In some embodiments, computing system 500 contains one or more method execution module(s) 508. In the example of computing system 500, computer system 501A includes the method execution module 508. In some embodiments, a single method execution module may be used to perform some aspects of one or more embodiments of the methods disclosed herein. In other embodiments, a plurality of method execution modules may be used to perform some aspects of methods herein.

It should be appreciated that computing system 500 is merely one example of a computing system, and that computing system 500 may have more or fewer components than shown, may combine additional components not depicted in the example embodiment of Figure 5, and/or computing system 500 may have a different configuration or arrangement of the components depicted in Figure 5. The various components shown in Figure 5 may be implemented in hardware, software, or a combination of both hardware and software, including one or more signal processing and/or application specific integrated circuits.

Further, the steps in the processing methods described herein may be implemented by running one or more functional modules in information processing apparatus such as general-purpose processors or application specific chips, such as ASICs, FPGAs, PLDs, or other appropriate devices. These modules, combinations of these modules, and/or their combination with general hardware are included within the scope of the present disclosure.

Computational interpretations, models, and/or other interpretation aids may be refined in an iterative fashion; this concept is applicable to the methods discussed herein. This may include use of feedback loops executed on an algorithmic basis, such as at a computing device (e.g., computing system 500, Figure 5), and/or through manual control by a user who may make determinations regarding whether a given step, action, template, model, or set of curves has become sufficiently accurate for the evaluation of the subsurface three-dimensional geologic formation under consideration.

The foregoing description, for purposes of explanation, has been described with reference to specific embodiments. However, the illustrative discussions above are not intended to be exhaustive or limiting to the precise forms disclosed. Many modifications and variations are possible in view of the above teachings. Moreover, the order in which the elements of the methods described herein are illustrated and described may be re-arranged, and/or two or more elements may occur simultaneously. The embodiments were chosen and described in order to best explain the principles of the disclosure and its practical applications, to thereby enable others skilled in the art to best utilize the disclosed embodiments and various embodiments with various modifications as are suited to the particular use contemplated.

## Claims

1. A method for processing pressure data, the method comprising:
obtaining input data comprising one or more documents including the pressure data which is related to a source wellbore;
processing the one or more documents into one or more images using a pressure agent;
identifying one or more candidate table regions based on the one or more images;
identifying one or more pressure point tables based on the one or more candidate table regions; and
generating one or more reshaped pressure point tables based on the one or more pressure point tables.

2. The method of claim 1, further comprising:
extracting respective table data from the one or more pressure point tables using a vision language model (VLM); and
generating a database based on the one or more reshaped pressure point tables, the one or more pressure point tables, the respective table data from the one or more pressure point tables, or a combination thereof.

3. The method of claim 1 or 2, wherein processing the one or more documents into the one or more images comprises converting the one or more documents into the one or more images, wherein at least one document of the one or more documents is in a portable document format (PDF).

4. The method of claim 3, wherein processing the one or more documents into the one or more images further comprises applying one or more image processing operations to the one or more images, wherein the one or more image processing operations include one or more of a deskewing operation, a denoising operation, a standardization operation, or a combination thereof and/or
wherein processing the one or more documents into the one or more images further comprises identifying one or more visual elements in each image of the one or more images using the pressure agent, wherein each visual element of the one or more visual elements comprises one or more of a cluster of text, one or more of a grid pattern, one or more of a line, one or more of a grid region, one or more of a textual density, or a combination thereof.

5. The method of claim 4, wherein identifying the one or more candidate table regions comprises:
identifying one or more table properties in each visual element of the one or more visual elements using the pressure agent and one or more image-processing tools; and
identifying the one or more candidate table regions of each visual element of the one or more visual elements based on the one or more table properties.

6. The method of claim 5, wherein identifying the one or more candidate table regions comprises generating a respective grid for each visual element of the one or more visual elements based on the one or more table properties, wherein identifying the one or more candidate table regions preferably further comprises identifying the one or more candidate table regions based on the respective grid of each visual element of the one or more visual elements.

7. The method of any one of the preceding claims, further comprising:
extracting respective table data from the one or more pressure point tables using a vision language model (VLM);
generating a database based on the one or more reshaped pressure point tables; and
generating an output based on the one or more candidate table regions, the one or more pressure point tables, the respective table data from each pressure point table of the one or more pressure point tables, the one or more reshaped pressure point tables, the database, or a combination thereof,
preferably further comprising performing an action in response to generating the output, wherein the action comprises generating or transmitting a signal that recommends, instructs, or causes a physical action to occur, wherein the physical action comprises one or more of optimizing a trajectory of a wellbore drilling operation, conducting drilling operations, conducting an exploratory operation, designing a production strategy, designing a hydraulic fracturing strategy, conducting risk assessments, selecting where to drill a wellbore, drilling the wellbore, varying a weight or torque on a drill bit drilling the wellbore, varying a concentration or flow rate of a fluid pumped into the wellbore, implementing an interpretation workflow, or any combination thereof.

8. A computing system, comprising:
one or more processors; and
a memory system comprising one or more non-transitory computer-readable media storing instructions that, when executed by at least one of the one or more processors, cause the computing system to perform operations for processing pressure data according to a method of any one of the preceding claims, the operations further comprising:
extracting respective table data from the one or more pressure point tables using a vision language model (VLM); and
generating one or more reshaped pressure point tables based on the one or more pressure point tables and the respective table data thereof.

9. The computing system of claim 8, wherein processing the one or more documents into the one or more images comprises:
converting the one or more documents into the one or more images, wherein at least one document of the one or more documents is in a portable document format (PDF); and
applying one or more image processing operations to the one or more images, wherein the one or more image processing operations include one or more of a deskewing operation, a denoising operation, a standardization operation, or a combination thereof.

10. The computing system of claim 8 or 9, wherein each image of the one or more images comprises one or more visual elements, and wherein identifying the one or more candidate table regions comprises:
identifying one or more table properties in each visual element of the one or more visual elements;
generating a respective grid for each visual element of the one or more visual elements based on the one or more table properties; and
identifying the one or more candidate table regions based on the respective grid of each visual element of the one or more visual elements.

11. The computing system of any one of the claims 8 - 10, wherein the respective table data of each pressure point table of the one or more pressure point tables comprises one or more of table schema, table values, or a combination thereof, and wherein generating the one or more reshaped pressure point tables comprises:
inputting the respective table data from each pressure point table of the one or more pressure point tables in predetermined domain-specific columns based on the respective table schema and the respective table values thereof and/or further comprising:
standardizing the one or more reshaped pressure point tables; and
generating a database based on the one or more reshaped pressure point tables.

12. A non-transitory computer-readable medium storing instructions that, when executed by one or more processors of a computing system, cause the computing system to perform operations for processing pressure data according to a method of any one of the claims 1 - 7, the operations further comprising:
extracting respective table data from the one or more pressure point tables using a vision language model (VLM); and
generating one or more reshaped pressure point tables based on the one or more pressure point tables and the respective table data thereof.

13. The non-transitory computer-readable medium of claim 12, wherein each image of the one or more images comprises one or more visual elements, and wherein processing the one or more documents into the one or more images comprises:
converting the one or more documents into the one or more images, wherein at least one document of the one or more documents is in a portable document format (PDF);
applying one or more image processing operations to the one or more images, wherein the one or more image processing operations include one or more of a deskewing operation, a denoising operation, a standardization operation, or a combination thereof;
identifying the one or more visual elements in each image of the one or more images using the pressure agent.

14. The non-transitory computer-readable medium of claim 12 or 13, wherein each image of the one or more images comprises one or more visual elements, and wherein identifying the one or more candidate table regions comprises:
identifying one or more table properties in each visual element of the one or more visual elements using the pressure agent, wherein the one or more table properties comprise a respective table density;
generating a respective grid for each visual element of the one or more visual elements based on the one or more table properties, wherein the respective grid is generated using a layout-based filtering tool; and
identifying the one or more candidate table regions based on the respective grid and the respective table density of each visual element of the one or more visual elements,
wherein the one or more table properties are preferably identified using the pressure agent and one or more image-processing tools, wherein the one or more image-processing tools comprise a line-based detection tool, a density-based analysis tool, or a combination thereof.

15. The non-transitory computer-readable medium of claim 12, 13 or 14, further comprising:
standardizing the one or more reshaped pressure point tables; and
generating a database based on the one or more reshaped pressure point tables, wherein generating the database comprises associating the one or more reshaped pressure point tables with the source wellbore using the pressure agent.
